# DEMANDE DE BREVET EUROPEEN

(11) **EP 1 084 932 A1**
(43) Date de publication de la demande: **21.03.2001**
(21) Numéro de dépôt: 00402515.1
(22) Date de dépôt: 12.09.2000
(51) Int. Cl.: B62D 1/187

(54) **Système d'articulation d'un ensemble de colonne de direction de véhicule automobile**

(30) Priorité: 15.09.1999 FR 9911532
(71) Demandeur: Ecia Industrie, 92100 Boulogne-Billancourt (FR)
(72) Inventeur: Hoblingre, André, 90380 Roppe (FR)
(74) Mandataire: Habasque, Etienne Joel Jean-François

(57) **Abrégé**

Ce système d'articulation d'un ensemble de colonne de direction de véhicule automobile, sur une structure de fixation de celui-ci sur ce véhicule, est caractérisé en ce que l'ensemble de colonne (1) est associé à une bague de montage (5) formant rotule disposée dans une cage complémentaire (6) de la structure de fixation (2), la bague (5) et la cage (6) comportant dans leurs parties supérieure et inférieure, des surfaces de contact complémentaires permettant un pivotement de la bague dans la cage autour d'un axe perpendiculaire à l'axe de l'ensemble de colonne lors des réglages en position angulaire de celui-ci et en ce qu'il est prévu des moyens (11) de montage sous contrainte de la bague (5) dans la cage (6) pour rattraper les jeux d'assemblage entre ces pièces.

## Description

La présente invention concerne un système d'articulation d'un ensemble de colonne de direction de véhicule automobile sur une structure de fixation de celui-ci sur ce véhicule.

Un système de direction de véhicule automobile comporte de façon générale un ensemble de colonne qui est monté entre des flasques d'une structure de fixation de celui-ci sur le reste du véhicule et qui comprend à proximité de l'une des extrémités de cet ensemble, un système d'articulation et à proximité de l'autre des extrémités de cet ensemble, des moyens de réglage en position de cet ensemble. Ces moyens de réglage autorisent par exemple un réglage en position angulaire et/ou en position axiale de l'ensemble de colonne et donc du volant pour adapter celle-ci à la morphologie du conducteur du véhicule.

Différents modes de réalisation du système d'articulation de cet ensemble sur la structure de fixation ont déjà été développés dans l'état de la technique.

C'est ainsi par exemple que dans certains de ces systèmes, on utilise un palier qui est monté articulé sur des canons de pivotement venus de matière avec les flasques de la structure.

Cependant, ces différents modes de réalisation présentent un certain nombre d'inconvénients notamment au niveau de leur complexité et de leurs caractéristiques de résistance mécanique.

Le but de l'invention est donc de résoudre ces problèmes.

A cet effet, l'invention a pour objet un système d'articulation d'un ensemble de colonne de direction de véhicule automobile, sur une structure de fixation de celui-ci sur ce véhicule, caractérisé en ce que l'ensemble de colonne est associé à une bague de montage formant rotule disposée dans une cage complémentaire de la structure de fixation, la bague et la cage comportant dans leurs parties supérieure et inférieure, des surfaces de contact complémentaires permettant un pivotement de la bague dans la cage autour d'un axe perpendiculaire à l'axe de l'ensemble de colonne lors des réglages en position angulaire de celui-ci et en ce qu'il est prévu des moyens de montage sous contrainte de la bague dans la cage pour rattraper les jeux d'assemblage entre ces pièces.

L'invention sera mieux comprise à la lecture de la description qui va suivre, donnée uniquement à titre d'exemple et faite en se référant aux dessins annexés, sur lesquels :

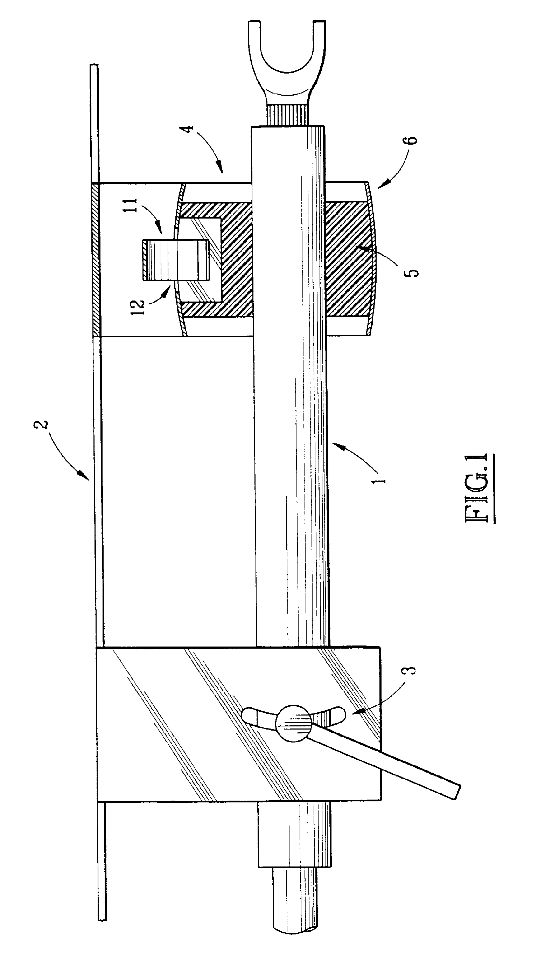

- la Fig.1 représente une vue de côté d'un ensemble de colonne de direction comportant un système d'articulation selon l'invention représenté en coupe;
- la Fig.2 représente une vue de face en coupe d'un tel système d'articulation; et
- la Fig.3 représente une vue de face en coupe d'une variante de réalisation de ce système.

On a en effet représenté sur ces figures, un ensemble de colonne de direction de véhicule automobile, réglable en position angulaire et qui est désigné par la référence générale 1.

Cet ensemble de colonne est associé à une structure de fixation 2 de celui-ci sur le reste de la structure du véhicule, cette structure de fixation étant munie à l'une de ses extrémités, de moyens 3 de réglage en position angulaire par exemple de l'ensemble de colonne par rapport au reste de la structure de fixation et à l'autre de ses extrémités, d'un système d'articulation 4 de cet ensemble sur la structure de fixation.

En fait, l'articulation de l'ensemble de colonne 1 par rapport au reste de la structure de fixation 2 est assurée par l'intermédiaire d'une bague de montage désignée par la référence générale 5, associée à l'ensemble de colonne 1 et formant rotule, disposée dans une cage complémentaire 6 de la structure de fixation 2.

Cette bague 5 et cette cage 6 comportent alors dans leurs parties supérieure et inférieure des surfaces de contact complémentaires permettant un pivotement de la bague dans la cage, autour d'un axe perpendiculaire à l'axe de l'ensemble de colonne, lors des réglages en position angulaire de celui-ci.

De plus, il est prévu des moyens de montage sous contrainte de la bague dans la cage pour rattraper les jeux d'assemblage entre ces pièces.

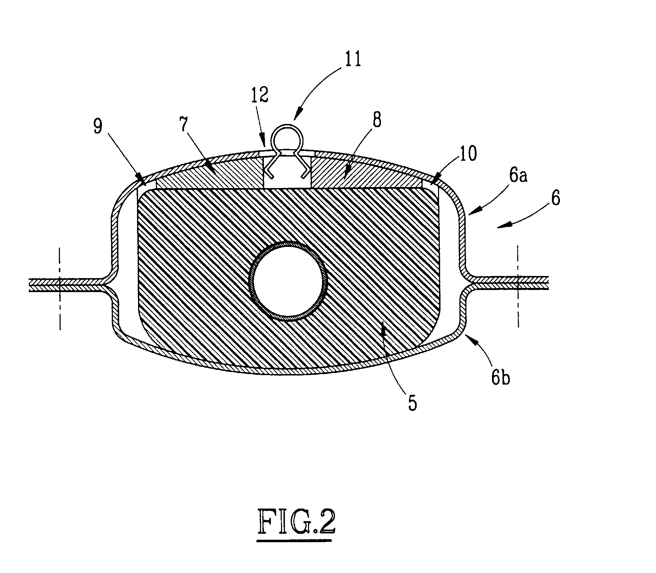

Comme on peut le voir plus clairement sur la figure 2, ces moyens de rattrapage des jeux d'assemblage comportent en fait par exemple deux cales symétriques désignées par les références générales 7 et 8, disposées dans des rainures transversales correspondantes 9 et 10 de la partie supérieure ou de la partie inférieure de la bague 5, ces cales étant sollicitées en appui contre la cage 6 par des moyens élastiques désignés par la référence générale 11 sur ces figures.

Dans cet exemple de réalisation, ces moyens élastiques sont disposés entre les deux cales et se présentent par exemple sous la forme générale d'une épingle engagée entre les extrémités correspondantes de ces cales.

On conçoit alors que ces moyens élastiques 11 permettent de solliciter les cales 7 et 8 en appui contre la face interne de la portion de cage 6 correspondante, pour assurer un rattrapage des jeux d'assemblage entre la bague et la cage.

La bague 5 et les cales 7 et 8 peuvent par exemple être réalisées en matière plastique. L'épingle élastique 11 est par exemple en matériau métallique et est déplaçable dans une lumière correspondante 12 de la portion correspondante de la cage 6 lors des réglages en position de l'ensemble de colonne.

Dans l'exemple de réalisation représenté sur ces figures, la cage 6 est en fait formée de deux demi-coquilles 6a et 6b fixées l'une sur l'autre.

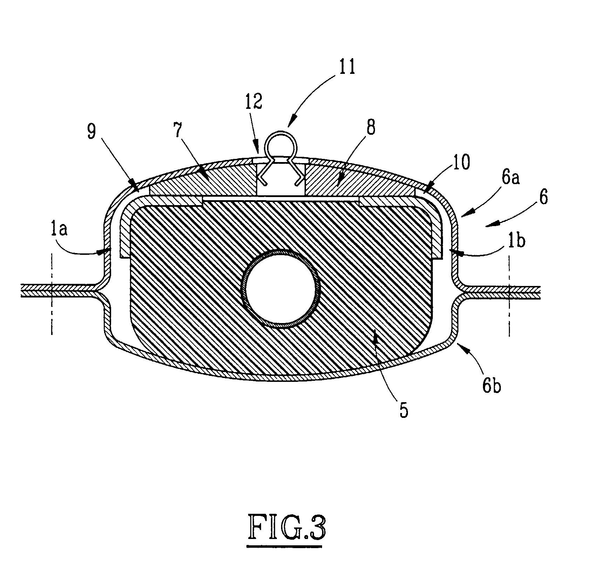

Dans l'exemple de réalisation qui a été décrit en regard de ces figures, l'ensemble de colonne est monté réglable en position angulaire, mais il va de soi bien entendu qu'un ensemble de colonne réglable en positions angulaire et axiale peut également être envisagé. Dans ce cas, au moins une partie de cet ensemble de colonne peut être montée déplaçable à coulissement axial par rapport à la bague 5, comme cela est illustré sur la figure 3.

Sur cette figure 3, des numéros de référence identiques désignent des pièces identiques ou analogues à celles déjà décrites en regard des figures précédentes.

De plus, sur cette figure 3, l'ensemble de colonne 1 comporte par exemple des rails symétriques de guidage 1a et 1b montés déplaçables à coulissement par rapport à la bague 5 entre celle-ci et les cales 7 et 8.

On notera que ces cales permettent alors également de rattraper les jeux d'assemblage entre ces rails et cette bague.

Enfin, les surfaces de contact des cales et de la bague, de part et d'autre de ces rails, peuvent être courbes de façon à rattraper tout défaut d'alignement entre ces pièces.

Bien entendu, différents modes de réalisation de cette structure de système d'articulation peuvent être envisagés.

Ainsi par exemple, les moyens élastiques de sollicitation des cales peuvent être venus de matière avec celles-ci.

## Revendications

1. Système d'articulation d'un ensemble de colonne de direction de véhicule automobile, sur une structure de fixation de celui-ci sur ce véhicule, caractérisé en ce que l'ensemble de colonne (1) est associé à une bague de montage (5) formant rotule disposée dans une cage complémentaire (6) de la structure de fixation (2), la bague (5) et la cage (6) comportant dans leurs parties supérieure et inférieure, des surfaces de contact complémentaires permettant un pivotement de la bague dans la cage autour d'un axe perpendiculaire à l'axe de l'ensemble de colonne lors des réglages en position angulaire de celui-ci et en ce qu'il est prévu des moyens (7,8,11) de montage sous contrainte de la bague (5) dans la cage (6) pour rattraper les jeux d'assemblage entre ces pièces.

2. Système selon la revendication 1, caractérisé en ce que les moyens de rattrapage des jeux comprennent deux cales symétriques (7,8) disposées dans des rainures correspondantes (9,10) de la partie supérieure ou inférieure de la bague (5) et sollicitées en appui contre la cage (6) par des moyens élastiques (11).

3. Système selon la revendication 2, caractérisé en ce que les moyens élastiques (11 ) sont disposés entre les deux cales.

4. Système selon la revendication 3, caractérisé en ce que les moyens élastiques comprennent une épingle (11) engagée entre les deux extrémités correspondantes des cales.

5. Système selon la revendication 2,3 ou 4, caractérisé en ce que la bague (5) et les cales (7,8) sont réalisées en matière plastique.

6. Système selon l'une quelconque des revendications 2 à 5, caractérisé en ce que l'ensemble de colonne est monté déplaçable axialement par rapport à la bague (5) et comporte deux rails symétriques de guidage (1a,1b) engagés entre la bague (5) et les cales (7,8) afin de rattraper les jeux d'assemblage entre ces pièces.

7. Système selon la revendication 6, caractérisé en ce que les surfaces de contact en regard des cales (7,8) et de la bague (5) de part et d'autre des rails (1a,1b), sont courbes pour rattraper les défauts d'alignement entre ces pièces.
